(19) **Europäisches Patentamt / European Patent Office / Office européen des brevets**

(11) **EP 4 206 416 B1**

(12) **FASCICULE DE BREVET EUROPEEN**

(45) Date de publication et mention de la délivrance du brevet:
**11.02.2026 Bulletin 2026/07**

(21) Numéro de dépôt: **22211159.3**

(22) Date de dépôt: **02.12.2022**

(51) Classification Internationale des Brevets (IPC):
**E04F 15/10** *(2006.01)*

(52) Classification Coopérative des Brevets (CPC):
**E04F 15/107; E04F 15/105;** E04F 2290/041

(54) **STRUCTURE MULTICOUCHE POUR LA REALISATION D'UN REVETEMENT DE SOL A PROPRIETE D'ISOLATION ACOUSTIQUE**

MEHRSCHICHTIGE STRUKTUR ZUR HERSTELLUNG EINER BODENBESCHICHTUNG MIT SCHALLDÄMMUNGSEIGENSCHAFTEN

MULTILAYER STRUCTURE FOR PRODUCING A FLOOR COVERING WITH SOUND-INSULATING PROPERTIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.12.2021 FR 2114643**

(43) Date de publication de la demande:
**05.07.2023 Bulletin 2023/27**

(73) Titulaire: **GERFLOR**
**69100 Villeurbanne (FR)**

(72) Inventeurs:
• **CHABAN, Nicolas**
**26130 Saint Restitut (FR)**
• **VIALON, Théo**
**26130 Saint-Paul-Trois-Châteaux (FR)**

(74) Mandataire: **Ipsilon**
**CS 70 203**
**15 rue Camille de Rochetaillée**
**42005 Saint-Etienne Cedex 1 (FR)**

(56) Documents cités:
FR-A1- 3 082 859    US-B2- 11 142 917
US-B2- 9 745 758

**Description**

**Domaine technique**

La présente invention se rapporte au domaine des revêtements de sol, et concerne plus particulièrement une structure multicouche, par exemple sous la forme d'une dalle ou lame, pour la réalisation d'un revêtement de sol à propriété d'isolation acoustique.

On entend par propriété d'isolation acoustique, l'atténuation du bruit d'impact et le confort à la marche mesuré par exemple selon NF EN ISO 717-2.

**Art antérieur**

Il est connu de l'art antérieur, le document WO2018162828 qui décrit un panneau multicouche pour la réalisation d'un revêtement de sol présentant des propriétés isolation acoustique, dont au moins l'une des couches est réalisée à partir de PVC et comprenant au moins une couche décor liée à une couche d'envers.

Selon ce document, la couche d'envers est liée à une sous-couche de textile non-tissé, destinée à être en contact avec le sol, et présentant une épaisseur comprise entre 0,5 mm et 3 mm.

Ce document permet d'améliorer les performances en isolation acoustique d'un revêtement de sol, notamment d'atténuation des bruits d'impact, selon la norme EN ISO 10140-3. Il est également connu US11142917 qui décrit une structure multicouche, dans laquelle une première couche amortissante peut éventuellement être moussée.

Cependant, l'atténuation du bruit d'impact et l'acoustique à la marche peuvent encore être améliorées pour satisfaire la norme NF EN ISO 717-2.

**Exposé de l'invention**

L'un des buts de l'invention est donc d'améliorer les structures multicouches de l'art antérieur pour satisfaire la norme NF EN ISO 717-2 prévoyant les conditions d'atténuation du bruit d'impact et à la marche, tout en gardant une résistance au poinçonnement satisfaisante selon la norme NF EN ISO 24343-1. L'invention a notamment pour but d'améliorer l'atténuation acoustique selon la norme NF S31-074-717-2 et NF EN ISO 717-2, notamment pour atteindre une atténuation acoustique de 6dB, voire de 17 dB, idéalement de 19dB, et d'améliorer la sonorité à la marche selon NF EN ISO 10140-3 et NF EN ISO 717-2, notamment pour atteindre une valeur de sonorité à la marche inférieure ou égale à 80 dB.

À cet effet, la structure multicouche selon l'invention comprend, dans cet ordre, une couche décor, une première couche de rigidité réalisée à partir de PVC, une première couche amortissante réalisée à partir de PVC, une deuxième couche de rigidité réalisée à partir de PVC, avec les première et deuxième couches de rigidité comprenant chacune un module d'élasticité compris entre 1,5 GPa et 12 GPa, mesuré selon la norme ISO 178 : 2011

De cette manière, la présence de deux couches de rigidité, en combinaison avec une couche amortissante permet d'obtenir une structure multicouche présentant un aspect rigide pour l'utilisateur, c'est-à-dire qualitatif, tout en présentant de bonnes propriétés d'atténuation des bruits d'impact et un bon confort à la marche selon la norme NF EN ISO 717-2, et qui évite les phénomènes de transfert des irrégularités du support en surface de la couche décor.

La couche de décor est de préférence réalisée à partir de PVC de sorte que la structure multicouche présente une bonne recyclabilité, car réalisée essentiellement à partir de PVC, avec éventuellement une quantité non pénalisante de fibres de verre.

La structure multicouche présente également une bonne stabilité thermique et dimensionnelle notamment selon les critères retenus dans la norme NF EN ISO 23999 :2018. En effet, la présence de deux couches de rigidité permet, lorsque ce type de revêtement est soumis à de fortes variations de température, notamment lorsqu'il est posé derrière des baies vitrées, de limiter les phénomènes de retrait ou de dilatation. Ces phénomènes entraînent l'apparition de défauts comme ceux connus sous le terme anglais « doming » (les panneaux s'incurvent et se décollent localement du sol en formant une bosse), de déclipsage des moyens d'assemblage des panneaux ou encore d'apparition de jeux entre deux panneaux consécutifs. La pose de la structure multicouche est également facilitée par la présence des deux couches de rigidité qui apportent une rigidité en main satisfaisante au revêtement. A titre d'illustration, cette rigidité est suffisante pour que dans le cas où l'on maintient une extrémité de la structure multicouche en laissant l'autre extrémité libre, par exemple sur le bord d'une table, la structure ne s'abaisse pas directement à partir du point où elle n'est plus maintenue mais progressivement sur toute la longueur de la structure.

De préférence, la structure multicouche comprend une épaisseur comprise entre 4 et 8 mm, avec la première couche de rigidité présentant une épaisseur comprise entre 1 et 3,5 mm, et la deuxième couche de rigidité présentant une épaisseur comprise entre 1 et 3 mm. La première couche amortissante a de préférence une épaisseur comprise entre 0,5 et 1,5 mm.

Une épaisseur plus importante des première et deuxième couches de rigidité dégraderait l'atténuation acoustique et l'acoustique à la marche, tandis qu'une épaisseur plus faible dégraderait la résistance au poinçonnement.

L'épaisseur de la structure multicouche étant limitée, la modification de l'épaisseur de l'une des couches de rigidité a pour conséquence de modifier l'épaisseur de l'autre. Par exemple une première couche de rigidité de 3 mm d'épaisseur et une deuxième couche de rigidité de 2 mm d'épaisseur est un exemple possible de combinaisons d'épaisseurs.

La première couche amortissante réalisée à partir de PVC est une couche moussée réalisée à partir de PVC. De préférence, la première couche amortissante moussée comprend un module de stockage compris entre 0,1 MPa et 10 MPa. Cette couche peut notamment être réalisée par enduction à partir d'une composition comprenant un agent gonflant tel que l'azodicarbonamide ou par extrusion. Selon cette alternative, des moyens d'assemblage mâles-femelles peuvent être réalisés dans l'épaisseur de la première couche de rigidité et/ou dans l'épaisseur de la seconde couche de rigidité.

Les moyens mâles-femelles de liaison ou d'assemblage de deux structures multicouches selon l'invention sont notamment décrits dans les documents GB 2 256 023, EP 1 026 341, WO 2012/004701, EP 2 843 153 ou encore WO 2016/030627.

De préférence, la première couche de rigidité et/ou la deuxième couche de rigidité comprennent une densité comprise entre 1150 kg/m$^3$ et 2500 kg/m$^3$, préférentiellement entre 1600 kg/m$^3$ et 2100 kg/m$^3$.

Une densité plus faible dégraderait la résistance au poinçonnement et la rigidité de la structure, tandis qu'une densité plus élevée dégraderait l'atténuation des bruits d'impact et à la marche.

De préférence, la structure multicouche comprend une deuxième couche amortissante destinée à être en contact avec le sol et réalisée en mousse de PVC ou sous forme d'un voile de fibres de verre non-tissées. La deuxième couche amortissante présente de préférence une épaisseur comprise entre 0,5 et 1,5 mm.

De cette manière, la présence de deux couches de rigidité, en combinaison avec les deux couches amortissantes permet d'obtenir une structure multicouche présentant un aspect rigide pour l'utilisateur, c'est-à-dire qualitatif, tout en présentant de très bonnes propriétés d'atténuation des bruits d'impact et un très bon confort à la marche selon la norme NF EN ISO 717-2, et qui évite les phénomènes de transfert des irrégularités du support en surface de la couche décor.

La première couche amortissante, et/ou la deuxième couche amortissante en mousse de PVC comprennent chacune une densité comprise entre 150 et 600 kg/m$^3$, préférentiellement entre 300 et 450 kg/m$^3$, pour une épaisseur comprise entre 0,5 et 1,5 mm, préférentiellement entre 0,8 et 1,2 mm, et plus préférentiellement entre 0,9 et 1,1 mm. L'utilisation de mousse en PVC favorise le recyclage de l'ensemble de la structure multicouche. D'autre part, cela permet également de faciliter l'assemblage de la structure multicouche, les différentes couches étant directement compatibles entre elles et peuvent éventuellement être assemblées par thermo-lamination.

Une épaisseur plus faible de la première couche amortissante et/ou la deuxième couche amortissante dégraderait l'atténuation acoustique et l'acoustique à la marche, tandis qu'une épaisseur plus élevée dégraderait la résistance au poinçonnement. Une densité plus faible diminue le module de stockage, alors qu'une densité plus élevée aura tendance à l'augmenter. Le module de stockage correspond notamment à l'énergie mécanique stockée par le matériau au cours d'un cycle de chargement. Par conséquent, le module de stockage est lié à la rigidité et à la récupération de la forme du matériau pendant le chargement.

À titre d'exemple, le module de stockage de la première couche amortissante en mousse de PVC et/ou de la deuxième couche amortissante en mousse de PVC est compris entre 0,1 MPa et 10 MPa, préférentiellement entre 0,3 et 1 MPa, plus préférentiellement entre 0,4 et 0,5 MPa, mesuré selon une méthode d'essai basée sur la norme EN 29052-1 :1992.

Le module de Young complexe d'un matériau est constitué de deux composantes : le module de stockage E' et le module de perte E". Le module de stockage représente le comportement élastique d'un matériau. C'est la capacité du matériau à stocker l'énergie pour la restituer intégralement sous forme de déformation. A l'inverse, le module de perte E" représente la partie visqueuse du matériau (énergie dissipée en chaleur et non restituée).

La détermination de la fréquence de résonance (fr) du système masse / ressort / masse permet d'obtenir la raideur dynamique apparente par unité de surface s't de l'éprouvette suivant l'équation $fr = \frac{1}{2\pi} * \sqrt{\frac{s'_t}{m'_t}}$ avec : m't la masse totale par unité de surface utilisée pendant l'essai.

Le dispositif de mesure utilisé est constitué d'un système qui génère un signal d'excitation dit "bruit blanc", amplifié par un amplificateur de puissance avant d'être transmis à un pot vibrant. Une tête d'impédance permet de récupérer la force injectée ainsi que la vitesse de déplacement du système masse / ressort / masse.

Ces signaux sont ensuite amplifiés par des amplificateurs de charge avant d'être transmis au système pour être traités et analysés.

Le dispositif expérimental consiste donc à utiliser une masse de 250kg posée sur un marbre, un échantillon de surface de 20cm x 20cm et une plaque de 4 ou 8 kg sur l'échantillon. La mesure s'effectue comme suit :

- Excitation par pot vibrant d'un bruit blanc à la normale du dispositif sur la plaque dans le domaine de fréquence de la première résonance.
- Mesures de la réponse du système à l'endroit de l'excitation sur l'impact et récupération de la FRF (fréquence de résonance fondamentale).
- Analyse de l'amortissement (méthode à -3dB sur la FRF) ainsi que la première fréquence de résonance de l'échantillon.

Le calcul de la raideur dynamique par unité de surface s', en MN/m$^3$ se décompose comme suit :

s' = s't + s'$_a$, avec : s't : raideur dynamique apparente par unité de surface de l'éprouvette, en MN/m$^3$

$$s'_t = 4\pi^2.m_t.f_r^2$$

où :

- mt est la masse surfacique de la charge appliquée sur l'éprouvette en kg/m$^2$,
- f$_r$ est la fréquence de résonance en Hz du système Masse - Ressort - Masse,
- s'$_a$ est la raideur dynamique par unité de surface du gaz captif (ici l'air), en MN/m$^3$ avec s'$_a$ = P$_0$/ dt.$\varepsilon$
- P$_0$ est la pression atmosphérique, en Mpa
- d$_t$ est l'épaisseur de la partie poreuse de l'éprouvette sous la charge statique appliquée, en mm
- $\varepsilon$ est la porosité du matériau avec $\varepsilon$ = 1 - (M / p.dt),
- M est la masse surfacique du matériau de l'éprouvette, en kg/m$^2$
- $\rho$ est la masse volumique du constituant solide du matériau de l'éprouvette, en kg/m$^3$.

Le calcul du module de stockage (E') à partir de ces valeurs s'effectue selon la méthode suivante :

$$E' = s'. d_t$$

avec E' en MPa, s' en MN/m$^3$ et dt en mètres.

De préférence, la première couche amortissante et/ou la deuxième couche amortissante sont réalisées en mousse de PVC à cellules fermées afin d'améliorer l'atténuation acoustique et diminuer la sonorité à la marche.

Lorsque la deuxième couche amortissante se présente sous la forme d'un voile de fibres de verre non-tissées, celle-ci présente de préférence une épaisseur comprise entre 0,7 et 1,7 mm, préférentiellement entre 1 et 1,5 mm, plus préférentiellement de 1,4 mm.

Une épaisseur plus faible dégraderait l'atténuation acoustique et l'acoustique à la marche, tandis qu'une épaisseur plus élevée dégraderait la résistance au poinçonnement.

Dans cette continuité, la densité de la deuxième couche amortissante sous forme d'un voile de fibres de verre non-tissées est comprise entre 90 et 150 kg/m$^3$. Une densité plus faible dégraderait la résidence au poinçonnement, tandis qu'une densité plus élevée dégraderait l'atténuation acoustique et l'acoustique de la marche. L'utilisation de fibres de verre apporte également un meilleur comportement acoustique et mécanique que des fibres classiques telles que des fibres de polyéthylène.

**Brève description des dessins**

D'autres caractéristiques et avantages de l'invention ressortiront clairement de la description qui en est réalisée ci-après, à titre indicatif et nullement limitatif, en référence aux figures annexées dans lesquelles :

[Fig. 1] est une vue en coupe d'un premier mode de réalisation d'une structure multicouche selon l'invention

[Fig. 2] est une vue en coupe d'un second mode de réalisation d'une structure multicouche selon l'invention, la deuxième couche amortissante en contact avec le sol étant réalisée en mousse de PVC.

[Fig. 3] est une vue similaire à celle de la figure 2, la deuxième couche amortissante en contact avec le sol se présentant sous la forme d'un voile de fibres de verre non-tissées.

**Description détaillée de l'invention**

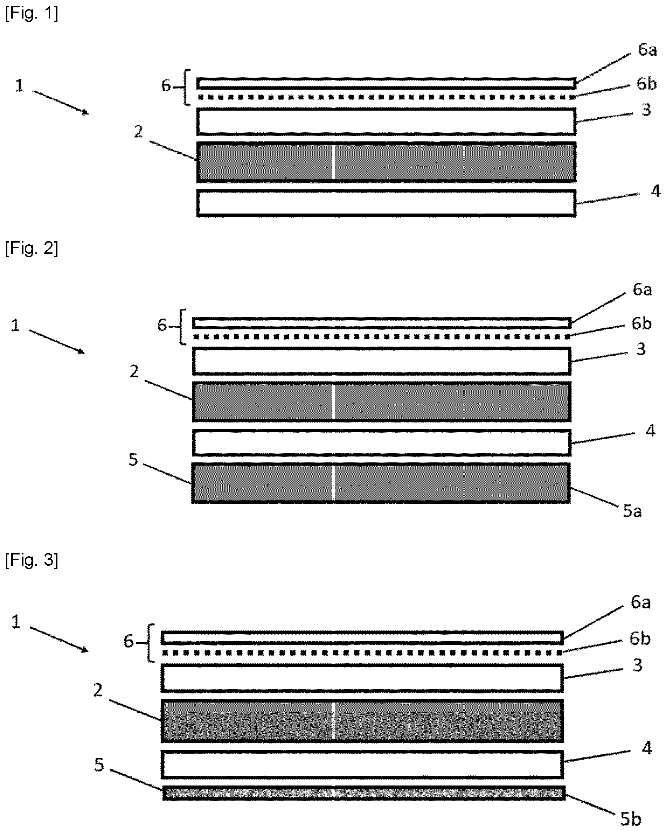

En référence aux figures 1, 2 et 3, l'invention concerne une structure multicouche (1), par exemple du type panneau, dalle ou lame, pour la réalisation d'un revêtement de sol, par exemple en pose collée, ou en pose libre en combinaison avec des moyens d'accouplement mâles/femelles présents de manière complémentaire sur les bords de la structure.

L'invention vise notamment à fournir une telle structure pour la réalisation d'un revêtement de sol présentant de bonnes performances d'isolation acoustique, en permettant l'atténuation du bruit d'impact et à la marche, mesuré par exemple selon la norme NF EN ISO 717-2, tout en gardant une résistance satisfaisante au poinçonnement selon la norme NF EN ISO 24343-1.

Selon l'invention, pour atteindre ces performances, la structure multicouche (1) possède une première couche amortissante (2) positionnée entre deux couches de rigidité (3, 4) à base de PVC, avec éventuellement une deuxième couche amortissante (5) en envers, c'est-à-dire destinée à être en contact avec le sol.

Plus précisément, la structure multicouche (1) comprend une couche décor (6), destinée à former la couche de surface du revêtement de sol, et est par exemple constituée d'une couche d'usure transparente (6a), de préférence réalisée à partir de PVC plastifié non chargé, et d'un film décor (6b). La couche décor (6) peut également être obtenue à partir de granulés réalisés à partir de PVC puis pressés, ou encore par enduction de plastisol, par extrusion en filière plate ou par calandrage.

D'une manière inconnue, le film décor (6b) peut être remplacé par une couche d'impression d'un décor, imprimée en face inférieure de la couche d'usure (6a), ou en face supérieure d'une première couche de rigidité (3) à laquelle ladite couche décor (6) est liée.

La couche d'usure (6a) assure la résistance mécanique et chimique du produit et présente une épaisseur comprise par exemple entre 0,1 et 1 mm, préférentiellement entre 0,3 et 0,7 mm, par exemple 0,5 mm, et le film décor (6b), positionné sous la couche d'usure (6a) présente une épaisseur de 0,1 mm, par exemple. La couche d'usure (6a) présente une densité comprise par exemple entre 1200 et 2200 kg/m$^3$ et/ou un module de Young compris entre 100 et 500 MPa.

Ainsi, la structure multicouche (1) selon l'invention comprend, dans cet ordre, la couche décor (6), une première couche de rigidité (3) réalisée à partir de PVC, une première couche amortissante (2) réalisée en mousse de PVC, une deuxième couche de rigidité (4) réalisée à partir de PVC. Selon une variante, la structure multicouche comprend une deuxième couche amortissante (5) réalisée en mousse de PVC (5a), voir figure 2, ou bien sous forme d'un voile (5b) de fibres de verre non-tissées, voir figure 3.

Les première et deuxième couches de rigidité (3, 4) comprenne chacune un module d'élasticité compris entre 1,5 GPa et 12 GPa, mesuré selon la norme ISO 178 :2011.

Les différentes couches (6, 3, 2, 4, 5) sont liées les unes aux autres par exemple par coextrusion, lamination ou collage. Des couches de liaison tel que des colles polyuréthane (PU) ou « hotmelt » en anglais, peuvent également être utilisées pour lier les couches les unes aux autres. Les couches (6, 3, 2, 4,) sont de préférence thermocollées, notamment lorsque la première couche amortissante (2) est une couche non moussée.

Dans le cas où la seconde couche amortissante (5) est un non-tissé, l'assemblage se fera par collage, par exemple à l'aide d'une colle PU ou « hotmelt » (terme anglais).

La première couche de rigidité (3) et/ou la deuxième couche de rigidité (4) présente une densité comprise entre 1150 kg/m$^3$ et 2500 kg/m$^3$, de préférence entre 1600 kg/m $^3$ et 2100 kg/m$^3$.

Sans sortir du cadre de l'invention, la première couche de rigidité (3) et/ou de la deuxième couche de rigidité (4) peut chacune être constituée de deux couches de densités différentes comprises dans la plage de valeurs précisées ci-dessus.

La première couche de rigidité (3) et/ou la deuxième couche de rigidité (4) comprenne de préférence une résistance à la flexion comprise entre 15 MPA et 30 MPa, de préférence entre 20 et 25 MPa, mesurée selon la norme ISO 178 :2011.

À titre d'exemple, la première couche amortissante en mousse de PVC (2) et/ou la deuxième couche amortissante de mousse de PVC (5a) présente entre 50 et 60 %, et de préférence 55 % de PVC, et entre 35 et 40 %, et préférence 37 % de plastifiants en poids total de la couche.

Selon un exemple de construction appelé exemple n°1, la première couche de rigidité (3) en PVC présente une épaisseur de 3 mm et une densité de 1926 kg/m3. La première couche de rigidité (3) en PVC présente également une résistance à la flexion de 22,22 Mpa, mesurée selon la norme ISO 178 :2011, un module d'élasticité (déformation de 0,05 à 0,25 %) de 7,77 GPa, mesuré selon la norme ISO 178:2011, et un module de stockage de 9,37 GPa, mesuré selon une méthode d'essai basée sur la norme EN 29-052-1.

La première couche amortissante (2) est réalisée en mousse de PVC présentant une épaisseur de 1 mm et une densité de 450 kg/m3. Le module de stockage de la première couche amortissante (2) est de 0,458 MPa, mesuré selon la méthode d'essai basée sur la norme EN 29-052-1.

La deuxième couche de rigidité (4) en PVC possède une épaisseur de 2 mm, et présente des paramètres identiques à ceux de la première couche de rigidité (3) en PVC, notamment en termes de densité, résistance à la flexion, module d'élasticité et module de stockage.

Dans cet exemple n°1, la deuxième couche amortissante (5) se présente la forme d'un voile (5b) de fibres de verre non-tissées d'une épaisseur de 0,8 mm et d'une densité de 121,75 kg/m$^3$.

Les fibres de verre non-tissées sont liées entre elles par un liant, qui est par exemple une résine phénolique qui représente par exemple entre 11 et 29% de la masse du voile (5b) de fibres de verre, par exemple 18 %.

La résistance à la compression du voile (5b) de fibres de verre non-tissées, à 10% de déformation est :

- supérieure ou égale à 1000Pa, préférentiellement supérieure ou égale à 3900Pa pour un échantillon de 5x5cm ;
- supérieure ou égale à 500Pa, préférentiellement supérieure ou égale à 1700Pa, pour un échantillon de 10x10cm ;
- supérieure ou égale à 500Pa, préférentiellement supérieure ou égale à 1600Pa, pour un échantillon de 20x20cm.

La résistance à la compression du voile (5b) de fibres de verre non-tissées, pour une déformation de 0,5mm, est :

- supérieure ou égale à 7000Pa, préférentiellement supérieure ou égale à 15000Pa, pour un échantillon de 5x5cm ;
- supérieure ou égale à 1000Pa, préférentiellement supérieure ou égale à 5000Pa, pour un échantillon de 10x10cm ;
- supérieure ou égale à 10200Pa, préférentiellement supérieure ou égale à 19100Pa, pour un échantillon de 20x20cm.

Une résistance à la compression plus faible dégrade la résistance au poinçonnement de la structure multicouche (1).

La résistance à la compression de la deuxième couche amortissante (5) permet de conserver une bonne isolation acoustique dans le temps, tout en contribuant à la résistance au trafic des moyens d'assemblage (s'ils existent). La résistance à la compression est liée à la masse surfacique de fibres, à la masse surfacique de liant, à la nature et la résilience des fibres. L'homme du métier sait bien adapter ces paramètres pour obtenir les valeurs de résistance à la compression souhaitées.

La résistance à la compression est mesurée selon la norme CEN / TS 16354 :2012 qui fait elle-même référence à la norme NF EN 826 de mai 2013. Cette méthode correspond à une mesure de la compression pour une déformation de 0,5mm.

Des tests effectués sur l'exemple n°1 selon la norme NF EN ISO 717-2 ont permis d'observer de manière satisfaisante une atténuation acoustique de 19 dB, une acoustique à la marche de 75 dB, un poinçonnement à 2h30 de 0,29 mm et un poinçonnement à 24h de 0,22 mm.

Des tests ont également été effectués sur un exemple n°2 selon la norme NF EN ISO 717-2.

Selon cet exemple n°2, la nature des couches est identique à celle de l'exemple n°1, sauf que :

- la première couche de rigidité (3) en PVC présente une épaisseur de 2 mm au lieu de 3 mm ;
- la première couche amortissante (2) en mousse de PVC présente une densité de 300 kg/m$^3$ au lieu de 450 kg/m$^3$.

Ces tests ont permis d'observer de manière satisfaisante une atténuation acoustique de 19,7 dB, une acoustique à la marche de 71 dB, un poinçonnement à 2h30 de 0,38 mm et un poinçonnement à 24h de 0,30 mm.

Selon un deuxième mode de construction de la structure multicouche (1) selon l'invention, la deuxième couche amortissante (5) est une mousse de PVC (5a).

Des tests ont également été effectués sur un exemple n°3, conforme au deuxième mode de réalisation, et selon la norme NF EN ISO 717-2.

Selon cet exemple n°3, la nature des couches est identique à celle de l'exemple n°1, sauf que :

- la première couche amortissante (2) en mousse de PVC présente une densité de 200 kg/m$^3$ au lieu de 450 kg/m$^3$ ;
- la deuxième couche amortissante (5) est une mousse de PVC (5a) ayant une densité de 450 kg/m$^3$ et une épaisseur de 1 mm.

Ces tests ont permis d'observer de manière satisfaisante une atténuation acoustique de 19 dB, une acoustique à la marche de 77 dB, un poinçonnement à 2h30 de 0,32 mm et un poinçonnement à 24h de 0,27 mm.

Des tests ont également été effectués sur un exemple n°4, conforme au deuxième mode de réalisation, et selon la norme NF EN ISO 717-2.

Selon cet exemple n°4, la nature des couches est identique à celle de l'exemple n°3, sauf que :

- la première couche de rigidité (3) présente une épaisseur de 2 mm au lieu de 3 mm ;
- la première couche amortissante (2) en mousse de PVC (5a) présente une densité de 300 kg/m$^3$ au lieu de 200 kg/m$^3$.

Ces tests ont permis d'observer de manière satisfaisante une atténuation acoustique de 17 dB, une acoustique à la marche de 72 dB, un poinçonnement à 2h30 de 0,30 mm et un poinçonnement à 24h de 0,24 mm.

A titre de récapitulatif des exemples testés de structures multicouches :

Exemple n°1 :

- Couche décor (6) : Couche d'usure (6a) PVC épaisseur 0,5mm + film décor (6b) imprimé
- 1ère couche de rigidité (3) : PVC, épaisseur : 3 mm, densité :1926 kg/m$^3$, résistance flexion : 22,22 Mpa, module de flexion : 7,77 GPa, module de stockage de 9,37 GPa
- 1ère couche amortissante (2) : Mousse de PVC à cellules fermées, épaisseur : 1 mm, densité :450 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (5) : Voile (5b) de fibres de verre non tissées, épaisseur :0,8 mm, densité :121,75 kg/m$^3$, résistance à la compression à 10% de déformation égale à 3900Pa pour un échantillon de 5x5cm ;

Exemple n°2 :

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa
- 1ère couche amortissante (2) : Mousse de PVC à cellules fermées, épaisseur : 1 mm, densité :300 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (5) : Voile (5b) de fibres de verre non tissées, épaisseur :0,8 mm, densité :121,75 kg/m$^3$, résistance à la compression à 10% de déformation égale à 3900Pa pour un échantillon de 5x5cm ;

Exemple n°3 :

- Couche décor (6) : Couche d'usure (6a) PVC épaisseur 0,5mm + film décor (6b) imprimé
- 1ère couche de rigidité (3) : PVC, épaisseur : 3 mm, densité :1926 kg/m$^3$, résistance flexion : 22,22 Mpa, module de flexion : 7,77 GPa, module de stockage de 9,37 GPa
- 1ère couche amortissante (2) : Mousse de PVC à cellules fermées, épaisseur : 1 mm, densité :200 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (5) : Mousse de PVC (5a) à cellules fermées, épaisseur : 1 mm, densité :450 kg/m$^3$,module de stockage de 0,458 Mpa

Exemple n°4 :

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa
- 1ère couche amortissante (2) : Mousse de PVC à cellules fermées, épaisseur : 1 mm, densité :300 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (5) : Mousse de PVC (5a) à cellules fermées, épaisseur : 1 mm, densité :450 kg/m$^3$, , module de stockage de 0,458 Mpa

  Les exemples 5 à 8 décrivent d'autres variantes possibles selon l'invention également testées selon la norme NF EN ISO 717-2.

Exemple n°5 ne faisant pas partie de l'invention

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa,
- 1ère couche amortissante (2) : Couche calandrée en PVC plastifié et chargé, épaisseur : 0,6 mm, Module d'Young 121 MPa, densité :1926 kg/m$^3$,
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa.

Exemple n°6 :

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa
- 1ère couche amortissante (2) : Mousse de PVC à cellules fermées, épaisseur : 1 mm, densité :300 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa

Exemple n°7 :

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa
- 1ère couche amortissante (2) : Mousse de PVC (5a) à cellules fermées, épaisseur : 1 mm, densité :450 kg/m$^3$, module de stockage de 0,458 Mpa
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (2) : voile (5b) de fibres de verre non tissées, épaisseur 1 mm, résistance à la compression à 10% de déformation égale à 3900Pa pour un échantillon de 5x5cm ;

Exemple n°8 ne faisant pas partie de l'invention

- Couche décor (6) : Couche d'usure (6a) PVC épaisseur 0,5mm + film décor (6b) imprimé
- 1ère couche de rigidité (3) : PVC, épaisseur : 2 mm, densité :1926 kg/m$^3$, résistance flexion : 22,22 Mpa, module de flexion : 7,77 GPa, module de stockage de 9,37 GPa
- 1ère couche amortissante (2) : Couche calandrée en PVC plastifié et chargée, épaisseur : 0,6 mm, Module d'Young 121 MPa, densité :1926 kg/m$^3$,
- 2ème couche de rigidité (4) : PVC, épaisseur : 2 mm, densité :1926 kg/m$^3$, résistance flexion : 22,22 Mpa, module de flexion : 7,77 GPa, module de stockage de 9,37 GPa
- 2ème couche amortissante (2) : voile (5b) de fibres de verre non tissées, épaisseur 1,3 mm, résistance à la compression à 10% de déformation supérieure ou égale à 3900Pa pour un échantillon de 5x5cm ;

Les résultats des tests sont compilés dans le tableau ci-dessous :

[Table 1]

| | Atténuation acoustique (dB) | Acoustique à la marche (dB) | Poinçonnement à 2h30 (mm) | Poinçonnement à 24h (mm) |
|---|---|---|---|---|
| Exemple n°1 | 19 | 75 | 0,29 | 0,22 |
| Exemple n°2 | 19,7 | 71 | 0,38 | 0,30 |
| Exemple n°3 | 19 | 77 | 0,32 | 0,27 |
| Exemple n°4 | 17 | 72 | 0,30 | 0,24 |
| Exemple n°5 | 6 | 80 | <0,40 | <0,30 |
| Exemple n°6 | 16 | 76 | <0,40 | <0,30 |
| Exemple n°7 | 17 | 75 | 0,28 | 0,23 |
| Exemple n°8 | 19 | 75 | 0,24 | 0,18 |

Il ressort de ce qui précède que l'invention fournit bien une structure multicouche permettant d'avoir une bonne atténuation acoustique car les valeurs d'atténuation acoustique atteignent 19dB selon les normes NF S31-074-717-2 et NF EN ISO 717-2 et une bonne acoustique à la marche avec des valeurs toujours inférieures à 80, voire à 75dB selon la norme NF EN ISO 10140-3 et NF EN ISO 717-2. De plus la résistance au poinçonnement à 2h30 et 24hr selon la norme NF EN ISO 24343-1 reste inférieure respectivement à 0,40 et 0,30 ce qui est satisfaisant.

**Revendications**

1. Structure multicouche (1), du type dalle ou lame, pour la réalisation d'un revêtement de sol présentant des propriétés d'isolation acoustique, la structure comprend, dans cet ordre, une couche décor (6), une première couche de rigidité (3) réalisée à partir de PVC, une première couche amortissante (2) réalisée à partir de PVC, une deuxième couche de rigidité (4) réalisée à partir de PVC, les première et deuxième couches de rigidité (3, 4) comprenant chacune un module d'élasticité compris entre 1,5 GPa et 12 GPa, mesuré selon la norme ISO 178 : 2011, *caractérisée en ce que* la première couche amortissante (2) est une couche moussée de PVC comprenant une densité comprise entre 150 et 600 kg/m$^3$, et une épaisseur comprise entre 0,5 et 1,5 mm.

2. Structure multicouche (1) selon la revendication 1, *caractérisée en ce que* la première couche amortissante comprend un module de stockage compris entre 0,1 MPa et 10 MPa, mesuré selon une méthode d'essai basée sur la norme EN 29052-1 :1992.

3. Structure multicouche (1) selon la revendication 1, *caractérisée en ce qu'*elle comprend une épaisseur comprise entre 4 et 8 mm, avec la première couche de rigidité (3) présentant une épaisseur comprise entre 1 et 3,5 mm, et la deuxième couche de rigidité (4) présentant une épaisseur comprise entre 1 et 3 mm.

4. Structure multicouche (1) selon la revendication 1, *caractérisée en ce que* la première couche de rigidité (3) et/ou la deuxième couche de rigidité (4) comprennent une densité comprise entre 1150 kg/m$^3$ et 2500 kg/m$^3$, préférentiellement entre 1600 kg/m$^3$ et 2100 kg/m$^3$.

5. Structure multicouche (1) selon la revendication 1, *caractérisée en ce qu'*elle comprend une deuxième couche amortissante (5) destinée à être en contact avec le sol et réalisée en mousse de PVC (5a) ou sous forme d'un voile (5b) de fibres de verre non tissées.

6. Structure multicouche (1) selon la revendication 5, *caractérisée en ce que* la deuxième couche amortissante (5) en mousse de PVC comprend une densité comprise entre 150 et 600 kg/m$^3$, préférentiellement entre 300 et 450 kg/m$^3$ et une épaisseur comprise entre 0,5 et 1,5 mm, préférentiellement entre 0,8 et 1,2 mm et plus préférentiellement entre 0,9 et 1,1 mm.

7. Structure multicouche (1) selon la revendication 5, *caractérisée en ce que* la deuxième couche amortissante (5) sous forme d'un voile (5b) de fibres de verre non tissées présente une épaisseur comprise entre 0,7 et 1,7 mm, préférentiellement entre 1 et 1,5 mm.

**Patentansprüche**

1. Mehrschichtstruktur (1) vom Platten- oder Bretttyp zur Ausbildung einer Bodenbelagsstruktur mit schalldämmenden Eigenschaften, wobei die Struktur in folgender Reihenfolge aufweist: eine Dekorschicht (6), eine erste starre Schicht (3) aus PVC, eine erste Dämpfungsschicht (2) aus PVC, eine zweite starre Schicht (4) aus PVC, wobei die erste und die zweite starre Schicht (3, 4) jeweils einen Elastizitätsmodul zwischen 1,5 GPa und 12 GPa aufweisen, gemessen nach Norm ISO 178:2011, **dadurch gekennzeichnet, dass** die erste Dämpfungsschicht (2) eine PVC-Schaumschicht mit einer Dichte zwischen 150 und 600 kg/m$^3$ und einer Dicke zwischen 0,5 und 1,5 mm ist.

2. Mehrschichtstruktur (1) nach Anspruch 1, **dadurch gekennzeichnet, dass** die erste Dämpfungsschicht ein Speicherelastizitätsmodul zwischen 0,1 MPa und 10 MPa aufweist, gemessen nach einer Prüfmethodik basierend auf der Norm EN 29052-1:1992.

3. Mehrschichtstruktur (1) nach Anspruch 1, **dadurch gekennzeichnet, dass** sie eine Dicke zwischen 4 und 8 mm aufweist, wobei die erste starre Schicht (3) eine Dicke zwischen 1 und 3,5 mm und die zweite starre Schicht (4) eine Dicke zwischen 1 und 3 mm hat.

4. Mehrschichtstruktur (1) nach Anspruch 1, **dadurch gekennzeichnet, dass** die erste starre Schicht (3) und/oder die zweite starre Schicht (4) eine Dichte zwischen 1150 kg/m$^3$ und 2500 kg/m$^3$, vorzugsweise zwischen 1600 kg/m$^3$ und

2100 kg/m$^3$, aufweisen.

5. Mehrschichtstruktur (1) nach Anspruch 1, **dadurch gekennzeichnet, dass** sie eine zweite Dämpfungsschicht (5) aufweist, die in Kontakt mit dem Boden kommen soll und aus PVC-Schaum (5a) oder in Form eines Vlies-Glasfaservlieses (5b) besteht.

6. Mehrschichtstruktur (1) nach Anspruch 5, **dadurch gekennzeichnet, dass** die zweite Dämpfungsschicht (5) aus PVC-Schaum eine Dichte zwischen 150 und 600 kg/m$^3$, vorzugsweise zwischen 300 und 450 kg/m$^3$, und eine Dicke zwischen 0,5 und 1,5 mm, vorzugsweise zwischen 0,8 und 1,2 mm, und besonders vorzugsweise zwischen 0,9 und 1,1 mm aufweist.

7. Mehrschichtstruktur (1) nach Anspruch 5, **dadurch gekennzeichnet, dass** die zweite Dämpfungsschicht (5) in Form eines Vlies-Glasfaservlieses (5b) eine Dicke zwischen 0,7 und 1,7 mm, vorzugsweise zwischen 1 und 1,5 mm, aufweist.

## Claims

1. Multilayer structure (1), of the panel or plank type, for forming a floor covering with acoustic insulation properties, the structure comprising, in this order, a decorative layer (6), a first rigid layer (3) made of PVC, a first cushioning layer (2) made of PVC, a second rigid layer (4) made of PVC, the first and second rigid layers (3, 4) each having a modulus of elasticity between 1.5 GPa and 12 GPa, measured according to standard ISO 178:2011, **characterized in that** the first cushioning layer (2) is a PVC foam layer having a density between 150 and 600 kg/m$^3$ and a thickness between 0.5 and 1.5 mm.

2. Multilayer structure (1) according to claim 1, **characterized in that** the first cushioning layer has a storage modulus between 0.1 MPa and 10 MPa, measured according to a test method based on standard EN 29052-1:1992.

3. Multilayer structure (1) according to claim 1, **characterized in that** it has a thickness between 4 and 8 mm, with the first rigid layer (3) having a thickness between 1 and 3.5 mm, and the second rigid layer (4) having a thickness between 1 and 3 mm.

4. Multilayer structure (1) according to claim 1, **characterized in that** the first rigid layer (3) and/or the second rigid layer (4) have a density between 1150 kg/m$^3$ and 2500 kg/m$^3$, preferably between 1600 kg/m$^3$ and 2100 kg/m$^3$.

5. Multilayer structure (1) according to claim 1, **characterized in that** it comprises a second cushioning layer (5) intended to be in contact with the floor and made of PVC foam (5a) or in the form of a non-woven glass fiber web (5b).

6. Multilayer structure (1) according to claim 5, **characterized in that** the second cushioning layer (5) made of PVC foam has a density between 150 and 600 kg/m$^3$, preferably between 300 and 450 kg/m$^3$, and a thickness between 0.5 and 1.5 mm, preferably between 0.8 and 1.2 mm, and more preferably between 0.9 and 1.1 mm.

7. Multilayer structure (1) according to claim 5, **characterized in that** the second cushioning layer (5) in the form of a non-woven glass fiber web (5b) has a thickness between 0.7 and 1.7 mm, preferably between 1 and 1.5 mm.

[Fig. 1]

[Fig. 2]

[Fig. 3]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018162828 A
- US 11142917 B
- GB 2256023 A
- EP 1026341 A
- WO 2012004701 A
- EP 2843153 A
- WO 2016030627 A